(19) **Europäisches Patentamt**

**European Patent Office**

**Office européen des brevets**

(11) **EP 1 675 055 A1**

(12) **EUROPEAN PATENT APPLICATION**

(43) Date of publication:
**28.06.2006 Bulletin 2006/26**

(51) Int Cl.:
***G06Q 10/00*** (2006.01)

(21) Application number: **05110832.2**

(22) Date of filing: **16.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **22.12.2004 EP 04300937**

(71) Applicant: **Intellectual Business Machines Corporation**
**Armonk, New York 10504 (US)**

(72) Inventors:
 • **BERTHAUD, Jean Marc**
  **06270, VILLENEUVE-LOUBET (FR)**
 • **DALSKY, Joel**
  **60192, Hoffman Estates (US)**

(74) Representative: **Etorre, Yves Nicolas et al**
 **Compagnie IBM France,**
 **Département Propriété Intellectuelle**
 **06610 La Gaude (FR)**

(54) **Qualifying means in a system managing the service levels provided by service providers**

(57)    System for managing a service level provided by a service provider to a customer comprising a processing engine (10) for transforming (14) measurement data composed of data point(s) into operational data using service time profiles and Services Level business logics, and evaluating (16) the operational data in order to produce Service Level results and qualified operational data. The system comprises evaluating means providing an evaluation tree enabling to produce intermediate values and top result which are stored in each node of the tree.

The processing engine comprises means (18) for qualifying the intermediate values and the operational data after evaluation, starting from top result and going down to each intermediate data point through top-down exploration of the tree, this qualification being made by producing for each node of the tree a set of new target values for each business period through a succession of reverse operations from top Service Level Targets, and by comparing values stored in each node of the tree with these new target values.

FIG. 1

## Description

### Technical field

The invention relates to service management and service presentation systems wherein measurement data regarding services delivered by Service Providers to customers are gathered and handled to compute and communicate service indicators defined in Service Level agreements and, in particular, relates to qualifying means in a system managing the Service Levels provided by Service Providers.

### Background

A Service Provider (SP) provides or manages resources for its customers. A resource can be a server, a particular application on a server, a networking device, people in a help desk to answer users, people to fix problems, people to manage and change systems configuration and location, ...etc... or a complex solution made of multiple elements to accomplish or support a customer business process. The Service Provider and the customer can be different firms, or different departments in a large global enterprise where departments are organized as support services for other departments, e.g. Marketing, Research, Sales, Production, ...

Normally, a Service Level Agreement (SLA) is signed between a provider and a customer to define the role of each party and to remove any ambiguity from the business relationship.

Such a SLA:

- Identifies the parties involved in the agreement.
- Describes the service to be provided, and identifies in a measurable and quantifiable manner indicators of the quality of the service on which obligations will be set, with a possible series of exceptions and stipulations in the way to calculate these indicators.
- Defines the obligations, called Service Levels (SL), to be met on the identified indicators, so that the expected quality of the delivered services is set in an un-ambiguous manner.
- Defines the agreement period for which these obligations are set forward.
- Pre-defines penalties to be paid/executed by the SP if the commitment(s) is(are) not met. If a commitment is exceeded, a reward can also be predefined, to be paid by the customer.
- Also defines reporting policies, corrective actions, dispute resolution procedures, termination criteria, intellectual property.

A SLA is encountered when considering utilities to be trusted "always on" services like water, electricity, gas, telephone or e-Business On Demand. In fact, a SLA exists when a specific service offer including commitments is engaged with a customer.

By itself, a SLA does not bring any change in the level of service delivered. The Service Provider and/or the customer need to implement a Service Level Management (SLM) program that will actually result in higher levels of services. Indeed, SLAs only indicate whether or not a service is reaching agreed levels. When not met, the issue is to determine what caused the violation, may be how to improve the service, or change the SLA or the provider. The Service Level Management begins with the development of new Service Levels for a new contract and continues throughout the life of the contract to ensure Service Level commitments are met and maintained.

The Service Level Management is commonly identified as the activities of:

- negotiating, identifying and agreeing the measurable services that support the Business Process of a customer, and defining the SLA articulation in an offering for service with Service Level Objectives (SLO) also known as Service Level Targets (SLT),
- monitoring resources used to deliver a service and capturing data on how well these resources perform from monitors or from logs,
- calculating intermediate and high level Service Levels results or scores using the predefined service parameters formulae (called metrics) and taking into account all kinds of exceptions that can occur, assessing attainment versus commitments and possible penalties or rewards,
- assessing impact of operational outages or degradations in terms of SLAs (services) and financial impacts, alerting in real-time of possible or effected outages, diagnosing problems for resolution, enforcing corrective actions wherever possible to regulate the delivery system and therefore try to proactively guarantee the achievement of obligations,
- reporting to the provider and the customer on real numbers versus contractual numbers, and sealing final numbers to be used for rebates or rewards,
- rebating to customers when commitments are not achieved, or rewarding the provider when commitments are exceeded, and

- refining, improving and reviewing SLA definitions, Service Levels and services that support the customer's Business Process.

Today, there are SLA Management Systems which are automated for managing SLAs such as IBM Tivoli Service Level Advisor, Computer Associates SLM, Digital Fuel or InfoVista. They are built to accomplish, at least, a minimum set of tasks such as capturing data from monitoring systems, and they participate or supply information to next steps such as alerting, enforcing, reporting.

However, for proper Service Level Management and in particular for continuous and deterministic service improvement, or for refining and renegotiating SLA contract terms, producing Service Level results data from measurement data alone is not sufficient. First, not only the committed top service level results need to be produced, but also intermediate SL results representing service components meaningful to the Service Provider and used in this top high level result, or Service Level related summary and detailed data. Secondly, it is necessary to show how base measurement data related to technical elements in the service delivered contribute to the SL result so that it is possible to trace back what needs to be modified to improve the SL result and it is possible to quantitatively track the detailed real effect of improvement actions on the technical elements of the solution. These data can then be used by people or by other enterprise management automated solutions (auto-correcting systems, reporting systems, data mining systems, etc.) to pinpoint areas for improvement and to track results of actions.

Few common elements can be identified in Service Levels for devising a common qualification policy to be applied on measurement data for this purpose, as there can be significant variations between two Service Levels, and as it depends on each Service Level business logic which can in turn be specific to each customer. This needs to be adapted to each case. To further increase the complexity of the case, even two similar or analogous Service Levels can require significantly different processes to produce close but different intermediate Service Level or summary data, or even data in slightly different forms (like a percentage which can be a number between 0 and 100, or a decimal number between 0 and 1) .Such cases exist because the surrounding systems using the data produced by the SL Management solution can change for each customer, or because the customer requires to see different intermediate and lower level results contributing to the end service level, or because the operational teams delivering the services are not the same and have different processes requiring different data.

None of the above mentioned solutions addresses the problem in a satisfying manner. They need to constantly redevelop a dedicated process specific to each SL business logic and each environment. Therefore these solutions spend development resources and maintenance activities on the SL Management solution provider side, are costly, and become a bottleneck for the use and deployment of the SL Management solution. In some cases, these processes are done as part of data extraction mechanisms from database to database, and lack flexibility and need specialized skills.

## Summary of the invention

Accordingly, the object of the invention is, within a system for managing the Service Levels provided by Service Providers to a customer, to produce any intermediate values necessary to explain a SL result and to automatically qualify these intermediate results and the detailed operational data used in calculations with regards to their participation in achieving or not Service Level Targets.

The invention therefore relates to a system for managing a service level provided by a service provider to a customer comprising a processing engine for transforming measurement data composed of data point(s) into operational data using service time profiles and Services Level business logics, and evaluating the operational data in order to produce Service Level results and qualified operational data. In the processing engine, the means for evaluating the measurement data provide an evaluation tree enabling to produce intermediate values and top result which are stored in each node of the tree. The processing engine comprises means for qualifying the intermediate values and the operational data after evaluation, starting from the top result and going down to each intermediate data point through top-down exploration of the tree, this qualification being made by producing for each node of the evaluation tree a set of new target values for each business period through a succession of reverse operations from top Service Level Targets, and by comparing values stored in each node of the evaluation tree with these new target values.

## Brief description of the drawings

The above and other objects, features and advantages of the invention will be better understood by reading the following more particular description of the invention in conjunction with the accompanying drawings wherein:

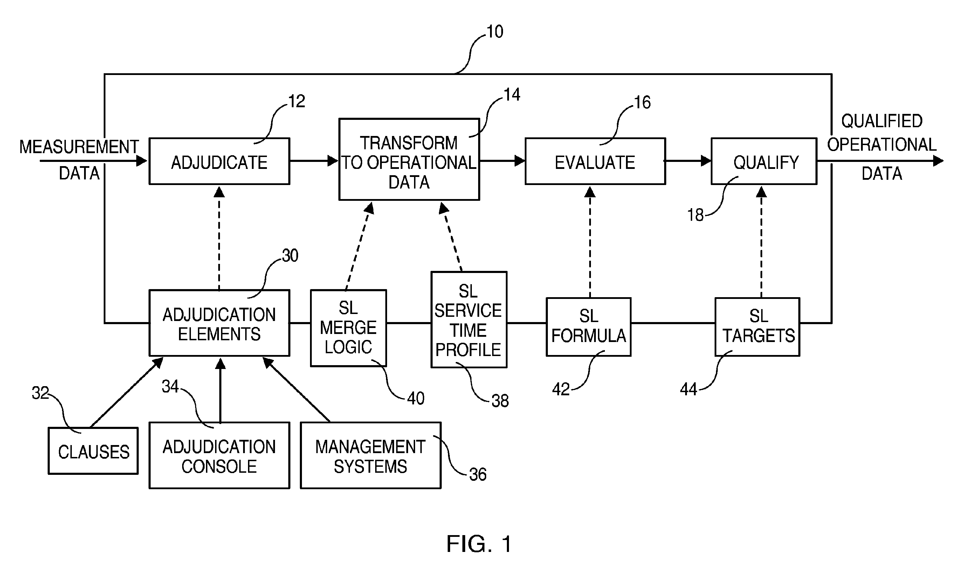

■ Fig. 1 is a schematic block-diagram representing the process engine used in the invention and the sequence of steps implemented therein;

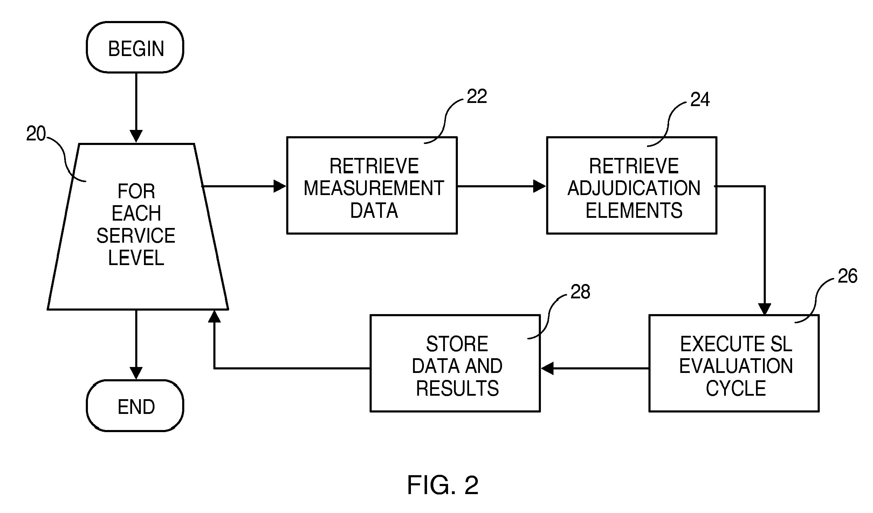

■ Fig. 2 is a schematic diagram illustrating the evaluation cycle implemented for each service level;

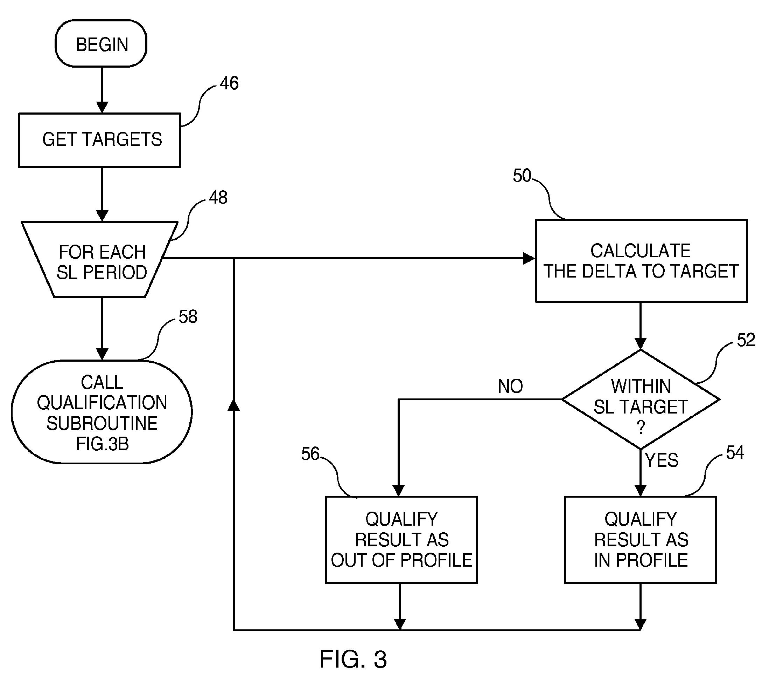

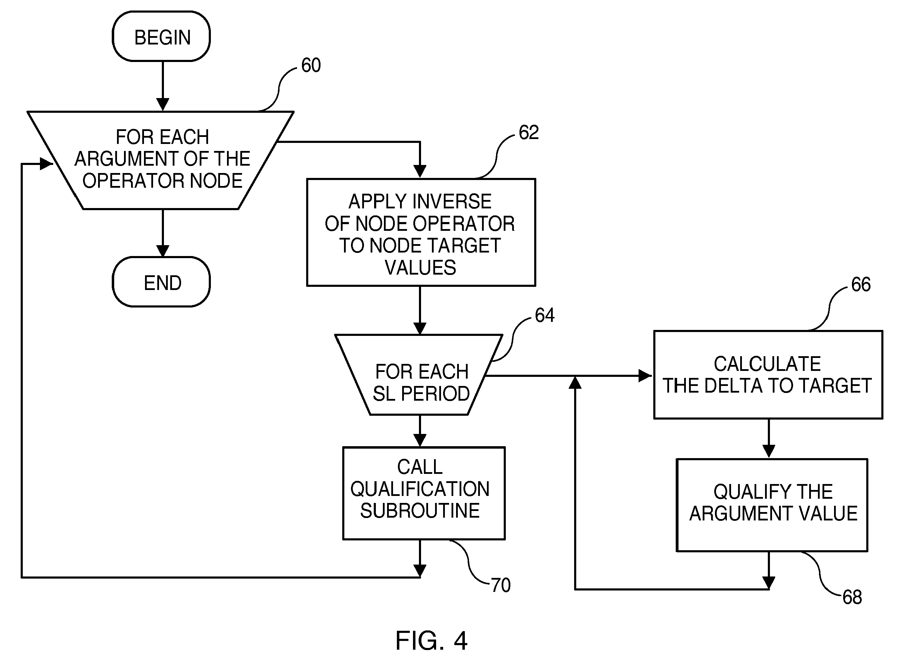

■ Figs. 3A and 3B are flow charts of the steps implemented in the process of evaluating and qualifying the measurement data according to the invention.

**Detailed description of the invention**

A system according to the invention is composed of a repository of the descriptions of the SLA corresponding to each Service Level, a first datastore for the measurement data, a second datastore for adjudication elements, a third datastore for SL results, operational data, adjudicated data and a processing engine for processing an evaluation cycle for each Service Level (SL).

The processing engine 10, illustrated in Fig. 1, includes the necessary software modules to process the measurement data received as input and to provide qualified operational data as output. As described hereafter, the process performed by the processing engine comprises essentially four main steps, an optional step of adjudicating the input measurement data (step 12), a step of transforming the adjudicated data into operational data (step 14), a step of evaluating these operational data (step 16) and a step of qualifying the operational data (step 18). In other words, as illustrated in Fig. 2, the process is implemented for each Service Level 20. First, the measurement data for the Service Level is retrieved (step 22), such measurement data being related to the evaluated SL period. Then, all the adjudication elements related to the evaluated SL period are retrieved (step 24) when the optional step of adjudication is used, from the second datastore for the adjudication elements and the SL evaluation cycle can be executed (step 26) using SLA description. Finally, the adjudicated data, the qualified operational data and the SL results are stored (step 28) into the third datastore.

Referring again to Fig. 1, the optional step of adjudicating (step 12) is used to reflect the real domain of responsibility of the Service Provider, or to reflect reality because, for some reason, the monitors provide incorrect data. A new set of data must be produced by this step. Although the measurement data have been modified, reference data are still available to be used by other systems requiring the original observed data, or so that changes can be audited since the data can be used for legal purposes.

Adjudication elements 30 can be clauses 32 created at contract signing time and which are valid for the whole Service Level life (exclusion cases, special conditions, limits on resources, ...) or can be created, from the adjudication console 34, at any time during the Service Level life by Service Managers when executing their Service Level Management tasks, or automatically from other Enterprise Management systems 36 like Problem and Change Management, using responsibility fields and other information. They must hold a reason for the modifications they bring, which will be shown to the end customer and must be agreed by him, and information about the creator who/which is first authenticated and goes through processes of authorization.

Each "modified" data point contains a list of references to applied adjudication elements and clauses in their specific order of appliance, for auditing, detailed reporting, explanation/customer relationship, and for legal justification and later billing exploitation (rebate or reward). Each adjudication element 30 is locked as soon as it is used so that no more modification can happen to it, for guaranteeing that proper information is available for auditing controls.

This step also supports a parallel information management process whereby the adjudication can be sealed so that no more modification can be made to the Service Level result and other produced data for a given Service Level period, i.e. no more adjudication element can be created for this Service Level period. This corresponds to a process of finalization just before result data are sent to billing systems or used for other legal purposes, and after they have been reviewed and agreed with the customer.

Again in Fig. 1, the second step performed by the processing engine 10 is to transform (step 14) the measurement data, adjudicated or not, into operational data by using a service time profile 38 describing the Service Level time logic (also commonly referred to as a service calendar and defining different periods of service with possibly different SLT's), and the specific business logic defined in the Service Level to modify raw data into a more appropriate form for evaluating and producing summary Service Level results. In addition, each produced operational data point refers back to the original measurement data point(s) it comes from, for tracing and auditing purposes. For example, a Service Level time logic can contain critical periods and off-peak hours in a month where different targets are to be achieved, or periods of no service. Monitoring devices and data collection systems have no knowledge of this information which is contract specific, and measurement data points can cover multiple such periods. Appropriate sets of data points need to be produced for generation of service level results and comparison with different service level targets. And to continue the example, if measurements are coming from different probes monitoring the same resource, they need to be merged 40 using a logic specified in the Service Level before they can be used for Service Level calculations when evaluating and producing summary Service Level results.

In more details and as an example, the step of transforming the measurement data, adjudicated or not, into operational data can be decomposed in two sub-steps. This example illustrates how adjudicated data are propagated to the next steps of the evaluation process.

*1. Merging of several measurement data on the same monitored resource, independently from the SL Service Time Profile (or business schedule).*

As an example, 3 probes are monitoring a URL, and it is defined in the SL that an outage is declared when all 3 probes agree to see an outage, and that this outage lasts from the first probe measurement detecting it to the first probe measurement returning to normal. In this case, only one measurement type is seen = observed URL state, so there will be only one group. 3 measurements feeds come in, identified by their different resource ids. These are put in one group of measurement, and then merged using the supplied logic.

*2. Split of measurement data against service Time Profile periods (Service Level time logic) to create separate sets for each period.* This step allows applying the same process in parallel to each set of data without caring anymore about the Service Time Profile before getting to the SL result comparison stage.

As an example, if an outage lasts from 3pm to 11pm and the Service Time Profile states that in a day, 8am to 8pm is normal hours, and outside it is off peak hours with a different target, then the outage needs to be split in two pieces, one from 3pm to 8pm with business period state = "normal hours", and one from 8pm to 11pm with business period state = "off peak hours".

Then, the operational data are evaluated (step 16) through a Service Level evaluation using a formula 42, specifying which data are to be fed as input, what is the form of data (response time, availability, counts, states, etc.), and how the input data should be processed to produce summary intermediate and top Service Level results. There is one set of data produced per business period in the Service Time Profile. The data produced by this step are to be used directly for Service Level attainment comparison, for reporting on service levels, and for input to other Enterprise Management systems. It matches what is contractually committed by the provider and represents a negotiated value and quality of the delivered service.

In the evaluation step, operational data are processed through the Service Level evaluator using a formula expressed in tree form. The evaluator runs on operational data produced by the previous stage in the SL Management solution which is the transformation of measurement data into operational data. But in fact, it can do both at the same time as it is going through the evaluation tree.

The tree has operators at its nodes, for example +, -, *, /, elapsed time, percentile, count, etc. which can be unary, binary or n-ary operators. Arguments of these operators are child nodes of these operator nodes. The leaves of the tree contain operators with no arguments, like constants or things to be calculated from the Service Level environment (for example, business schedule state durations), or contain references to measurement data used by the SL evaluation.

The references to data must specify exactly which data to be used in the total set of supplied data to the evaluation stage, for example: which measurement type and other measurement identifiers and what type of data (state or response time), because some operators can accept both types of data and need to have a slightly different behavior depending on the type of data, in particular the operators used to select subsets of the data according to some conditions.

The tree can be first precompiled in an internal structure that will be fast to interpret and explore at evaluation time. This is particularly well suited for recursive algorithms which allow to maintain a clear and conceptual interpreter code.

The Evaluator interprets the precompiled SL formula using a recursive algorithm and going through the evaluation formula tree from bottom to top, (rightmost first or leftmost first is not important), and it populates the nodes of the tree with results as it progresses towards the top. When a node identified as being an intermediate or summary result is reached, it publishes the corresponding results for use later, and continues the process until top which is another point of result publication.

When it is on an operator node, it calls the appropriate function to produce results, using the formula operator code as index into a function table in an operator library. When it is on a measurement variable node, it produces detailed Operational data (not yet qualified) using the process of transformation of measurement data into operational data.

An evaluation tree can be described through a mathematical formula with variables, operators and constants, and a series of descriptions to associate the variables with real measurement input data. The formula describes how to produce a result using the selected operators, constants, and variables. It also indicates which intermediate compounds in the formula are to be stored as intermediate results. A mathematical formula can always be expressed as a tree, and vice-versa.

Examples of sample custom metric definitions are supplied below.

*First sample custom metric definition*

```
<metric name="SampleOffComp1.CMETest_free_memory">
        <var   A,   indicator,   MsmtTyp.MsmtTyp_Nm.TotalAvail,
AMY_MEMORY >
        <var   B,   indicator,   MsmtTyp.MsmtTyp_Nm.TotalCache,
AMY_MEMORY >
    <formula (/ (- A B)[1,Free memory in bytes]
              A [2,Total memory in bytes])>
</metric>
```

This evaluation tree returns the free percentage of memory as a [0, 1] number, calculated from total memory and memory used for caching, and stores two intermediate results in the summary operational data store which are the number of bytes in free memory and the total memory size in bytes.

*Second sample custom metric definition*

```
<metric name="SampleOffComp2_PCR36_URL.CMETest_PCR36 URL">
    <var A, state, EP4_URL >
    <formula (* (/ (- (sl_duration)
                      (elapsed_time A s:"Unavailable")
              )[2, "Available milliseconds"]
              (sl_duration)[1, "Scheduled milliseconds"]
               )
               100.0
            )>
    </metric>
```

This evaluation tree really means that the measurement data points, from EP4_URL data source, assigned to this Service Level will be grouped under the variable name A, and that the final result is to be calculated as:

$$\frac{(L\_scheduled\_time - time\_elapsed\_in\_Unavailable\_state\_by\_variable\_A) * 100}{SL\_scheduled\_time}$$

The returned number will be between 0 and 100. It also produces 2 intermediate results to be stored in the summary operational data store, the available time in milliseconds (column 2), and the SL scheduled time in milliseconds (column 1) .

The following diagram shows the internal representation of the second sample evaluation tree in the interpreter, and the production of results at each stage of the tree, and the moments (1) and (2) where intermediate results will be stored in the summary operational data store.

C=99.18
O=99.37 *

C=0.9918
O=0.9937 /

100
C=100
O=100

C=1162200000
O=1411200000 −(2)

sl_duration (1)
C=1171800000
O=1420200000

sl_duration
C=1171800000
O=1420200000

Elapsed_time   C=9600000 (160 minutes)
O=9000000 (150 minutes)

A
C= set of op data points
O= set of op data points

Unavailable
C= Unavailable
O= Unavailable

Finally, the operational data resulting from evaluation are qualified (step 18) with regards to their participation in achieving or degrading results compared to Service Level targets 44 for each business period. This step qualifies produced operational data points with labels like "In profile" (=contributes to good SL result) or "Out of profile" (=contributes to degrading SL result), and with deltas to breaking limit to understand the margin by which a data point is contributing to the high level SL results, whether bad or good (for example : time remaining before "Out of profile" or violation, for problem resolution times, etc.).

This enriching of operational data is to be used by the Service Provider Managed Operations people and by their automated systems to continuously track the detailed contribution to the end to end final service level, to understand their impact on it, and to help them prioritize work and actions in order to guarantee the end to end service level. As an example of the latter, the time remaining before violation for problems resolution is an information to be used to understand which problems to solve first in the list of currently open problems. As an example of the former, showing which detailed metrics contribute to SL result degradation helps to pinpoint quickly in the input data set what are the points to improve, and to control the effect of corrective actions. This is possible because each operational data point points back to adjudicated data, which in turn has in its history the list of modifications made to the initial data points. In addition, the delta to breaking limit information gives an idea of the amount of effort to spend to improve the service level, and of where to concentrate to yield best benefits.

This invention allows qualifying the operational data stored in each node of the formula tree, with regards to the SL Targets, i.e.: top results, intermediate and summary results, and detailed input operational data.

As illustrated in Fig. 3A and Fig. 3B, the operational data qualification is a recursive algorithm. First, as illustrated in Fig. 3A, the process gets the targets for the Service Level (step 46). The process is implemented for each SL period 48 by calculating the difference between the Service Level target and the root node result value called the delta to target (step 50). Then, it is determined whether the delta to target is within the SL target range or not (step 52). If it is the case, the top result is qualified as "In profile" (step 54). If it is not the case, the top result is qualified as "Out of profile" (step 56). Then, the process calls the qualification subroutine (step 58) described in Fig. 3B.

In the qualification subroutine process, each operator node in the formula tree propagates back the qualification to its arguments (again "Out of profile" and "In profile", and calculation of delta to target), using a rule specific to each operator and the set of breach values that were used to qualify its result, and generates a set of new breach values, one for each argument, for further propagation in the tree down to its leaves. This can be seen as using an inverse operator of the evaluation operator

In more details, the process illustrated in Fig. 3B is implemented for each argument of the operator node 60 by first applying the inverse of the node operator to the node target SL values in order to produce a set of new target values (step 62). Then, a sub-process is implemented for each SL period 64. This one consists in calculating the difference between the new target value and the argument data which is called the delta to target and store it (step 66), and qualifying the argument data points as "in profile" or "out of profile" as above (step 68). This qualification can be made by propagating the qualification information in output data point(s) directly to the input data without using any 'target rule'. In such a case, the calculation of targets for input data is still needed for calculating the deltas to target. This is the case for example of binary arithmetic operators: if the result is out of profile, both input arguments are out of profile, because both contribute equally to the result. The other way is to calculate the target on inputs, calculate the deltas to target, and to qualify accordingly.

Then, the qualification routine is called and applied recursively to each argument with new SL target values of the corresponding lower nodes/operators (step 70) so that they can in turn qualify their argument data and continue the process.

An illustration of the process is shown in the tree form below, associated with the second sample given previously. The text in underlined characters means in profile, and the text in italic characters means out of profile. The text in normal characters shows cases where the operational data may not be not qualified (implementation choice), because they are calculation constants for example. The delta to target is not shown. A set of data points can have each of its points being qualified differently, such as the one under variable A.

*C=99.18*
0=99.37 *

*C=0.9918*
0=0.9937 /

**100**
C=100
0=100

*C=1162200000*
0=1411200000    - (2)

**sl_duration (1)**
C=1171800000
0=1420200000

**sl_duration**
C=1171800000
0=1420200000

Elapsed_time   *C=9600000 (160 minutes)*
0=9000000 (150 minutes)

A
*C= set of op data points*
0= set of op data points

Unavailable
C= Unavailable
0= Unavailable

The system which is described above has many advantages like the following:

- The evaluation formula tree is something which can easily be represented in text form or in XML forms for exchange with other systems like engagement and contract description systems, or for computer driven evaluation task distribution taking into account service levels like in GRID computing. It can also be part of the service Level contract signed with the customer to unambiguously define how a service level is going to be evaluated and be taken directly from there.
- It is very easy to take one evaluation tree, and to change it slightly to produce another Service Level with slight differences (like the case of percentage mentioned above). It is also quite easy to pick parts of evaluation trees to reuse them in other evaluation trees, or to identify in advance reusable parts by associating to them intermediate/ summary results: quick reuse and identification of what is reusable.
- It is very easy to pre-compile the evaluation in a form which will speed up processing, while keeping the advantages of an interpreter.
- The interpreter allows to change dynamically the tree structure and to support changes to measurements or to a Service Level definition as the SL goes through its life cycle and it gets refined with the customer to better reflect the business value of the evaluated service, without changing anything to the SL Management solution or defining new contract and offering records to replace old ones.
- The process is independent of the Service Levels, all service levels have targets and therefore have comparison operators. This is a universal process.
- The solution requires extension or development only when new comparison operators are used which didn't exist previously, or when new evaluation operators are introduced in the SL evaluation engine (the reverse operator must be also developed in the qualification engine).
- Complex evaluation formulas can be qualified down to the detailed operational data with this mechanism, that would otherwise be very difficult.

- The qualification of operational data at all stages of the evaluation tree (intermediate, summary and detailed data) with delta to targets helps to prioritize work and actions in the activities to guarantee end to end service levels by focusing on the elements which will fail first.

**Claims**

1. A system for managing a service level provided by a service provider to a customer comprising a processing engine (10) for transforming (14) measurement data composed of data point(s) into operational data using service time profiles and Services Level business logics, and evaluating (16) said operational data in order to produce Service Level results and qualified operational data ;
Said system being **characterized in that**
means for evaluating said measurement data in said processing engine provide an evaluation tree enabling to produce intermediate values and top result which are stored in each node of said tree, and
said processing engine comprises means (18) for qualifying said intermediate values and said operational data after evaluation, starting from top result and going down to each intermediate data point through top-down exploration of the tree, this qualification being made by producing for each node of said evaluation tree a set of new target values for each business period through a succession of reverse operations from top Service Level Targets, and by comparing values stored in each node of said evaluation tree with these new target values.

2. The system according to claim 1, wherein said qualifying means are adapted to calculate the difference between the new target value and the argument data, said difference being called the delta to target, and qualifying the argument data points as "in profile" or "out of profile" (step 68) according to whether said delta to target is within the SL target range.

3. The system according to claim 1 or 2, wherein said processing engine further comprises means (12) for adjudicating said measurement data before transforming them into operational data, this adjudication being made by using a set of adjudication elements (30) describing the modifications to bring,

4. The system according to claim 3, wherein said adjudication elements (30) used by said adjudicating means (12) are selected amongst clauses (32) created at contract signing level and being valid for the whole Service Level life, elements created from an adjudication console (34) at any time during the Service Level life by Service Level managers, or elements from other enterprise management systems (36).

5. The system, according to claim 4, wherein each of said adjudication elements (30) is locked after it has been used by said adjudicating means (12).

6. The system, according to claim 5, wherein each adjudicated measurement data point contains a list of references to the adjudication elements which have been used and clauses in their specific order of appliance for auditing, detailed reporting, explanation customer relationship and for legal justification and later billing exploitation.

7. The system according to claim 6, wherein said processing engine (10) uses, for transforming adjudicated data into operational data, a Service Level merge logic (40) to merge several measurement data on the same monitored resource so that the format of initial and transformed data can be precisely defined and a service time profile (38) to split data into separate sets of data for each period.

8. A method for managing the Service Level provided by service providers to a customer comprising the steps of transforming (14) measurement data into operational data using service time profiles and Service Level business logics and evaluating (16) said operational data in order to produce Service Level results and qualified operational data;
said method being **characterized in that** it comprises the steps of:

   evaluating (16) said measurement data by using an evaluation tree enabling to produce intermediate values and top result which are stored in each node of said tree, and
   qualifying (18) said intermediate values and said operational data after evaluation, starting from top result and going down to each intermediate data point through top-down exploration of the tree, this qualification being made by producing for each node of said evaluation tree a set of new target values for each business period through a succession of reverse operations from top Service Level Targets, and by comparing values stored in each node of said evaluation tree with these new target values.

9. The method according to claim 8, wherein said qualifying step (18) comprises the step of calculating the difference between the new target value and the argument data (66), said difference being called the delta to target, and qualifying the argument data points as "in profile" or "out of profile" (68) according to whether said delta to target is within the SL target range.

10. The method according to claim 9, further comprising the step of adjudicating (12) said measurement data before transforming them into operational data, this adjudication being made by using a set of adjudication elements (30) describing the modifications to bring,

11. The method according to claim 10, wherein said adjudication elements (30) are selected amongst clauses (32) created at contract signing level and being valid for the whole Service Level life, elements created from an adjudication console (34) at any time during the Service Level life by Service Level managers or elements from other enterprise management systems (36).

12. The method according to claim 11, wherein each of said adjudication elements (30) is locked after it has been used in said adjudicating step.

13. The method according to claim 12, wherein said step of transforming the adjudicated measurement data into operational data (14) uses a Service Level merge logic (40) to merge several measurement data on the same monitored resource so that the format of initial and transformed data can be precisely defined and a service time profile (38) to split data into separate sets of data for each period.

FIG. 1

FIG. 2

FIG. 3

EP 1 675 055 A1

BEGIN

FOR EACH
ARGUMENT OF THE
OPERATOR NODE — 60

END

APPLY INVERSE
OF NODE OPERATOR
TO NODE TARGET
VALUES — 62

FOR EACH
SL PERIOD — 64

CALL
QUALIFICATION
SUBROUTINE — 70

CALCULATE
THE DELTA TO TARGET — 66

QUALIFY THE
ARGUMENT VALUE — 68

FIG. 4

**European Patent Office**

**DECLARATION**

which under Rule 45 of the European Patent Convention shall be considered, for the purposes of subsequent proceedings, as the European search report

Application Number

EP 05 11 0832

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV. G06Q10/00 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3.

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
|---|---|---|
| Munich | 28 April 2006 | Neppel, C |

EPO FORM 1504 (P04C37)